(19) Europäisches Patentamt / European Patent Office / Office européen des brevets

(11) **EP 3 470 891 B1**

(12) **FASCICULE DE BREVET EUROPEEN**

(45) Date de publication et mention
de la délivrance du brevet:
**27.09.2023 Bulletin 2023/39**

(21) Numéro de dépôt: **18200031.5**

(22) Date de dépôt: **12.10.2018**

(51) Classification Internationale des Brevets (IPC):
**G01V 8/00** *(2006.01)* **G01V 11/00** *(2006.01)*

(52) Classification Coopérative des Brevets (CPC):
**G01V 8/005; G01V 11/00**

(54) **INSPECTION D'UNE CHAUSSURE AVEC UNE CAMÉRA THERMIQUE**

INSPEKTION EINES SCHUHS MIT EINER WÄRMEBILDKAMERA

INSPECTION OF A SHOE WITH A THERMAL CAMERA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.10.2017 FR 1759628**

(43) Date de publication de la demande:
**17.04.2019 Bulletin 2019/16**

(73) Titulaire: **Manneschi, Alessandro**
**52100 Arezzo (IT)**

(72) Inventeur: **Manneschi, Alessandro**
**52100 Arezzo (IT)**

(74) Mandataire: **Regimbeau**
**20, rue de Chazelles**
**75847 Paris Cedex 17 (FR)**

(56) Documents cités:
**US-A1- 2005 116 825 US-A1- 2010 123 571**
**US-A1- 2015 369 756 US-B1- 6 975 232**

## Description

<u>DOMAINE DE L'INVENTION</u>

La présente invention concerne le domaine des détecteurs conçus pour la détection d'objets ou matières non autorisés dans une zone à accès protégé.

<u>ARRIERE-PLAN TECHNOLOGIQUE</u>

Il apparaît aujourd'hui nécessaire de contrôler avec une grande fiabilité les tentatives d'introduction ou de sortie de certains produits, par exemple mais non exclusivement des matières explosives, dans ou hors d'une zone sensible.

Le problème ainsi posé couvre un très large éventail de situations, qui englobe notamment et non limitativement la tentative d'introduction de produits dans une zone protégée, tel qu'un magasin, une école, une gare, un organisme public voir privé, ou la tentative de sortie de produits hors d'un périmètre défini, par exemple en cas de vol dans une entreprise ou sur un site protégé.

Depuis plusieurs années, des scanners corporels (généralement désignés par leur terminologie anglosaxonne « body scanner ») ont été développés afin de détecter des armes, des explosifs, etc. cachés sous les vêtements d'individus pénétrant dans une zone protégée. Tous ces systèmes utilisent des technologies basées sur la détection d'énergies de rayonnement modulées ou émises par le corps des individus inspectés. Les énergies de rayonnement ainsi utilisées comprennent les rayons X, les microondes, les ondes millimétriques, la lumière infrarouge, les ondes térahertz et les ultrasons.

Malgré l'utilisation de plusieurs types d'énergies de rayonnement et de géométries d'imagerie, ces scanners corporels ont tous pour principe la création d'une image électronique de l'individu sur laquelle les vêtements de l'individu sont transparents. Cette image est ensuite affichée sur un écran et visualisée par un opérateur afin que celui-ci détermine si l'individu porte un objet cible. Pour cela, l'opérateur, qui est formé à la détection d'objets cibles, doit être capable de déterminer si les objets identifiés par le scanner corporel correspondent à l'anatomie humaine, à un objet autorisé tel qu'un briquet, un mouchoir ou encore des pièces, ou à un objet cible tel qu'une arme ou un explosif.

Il s'avère de nos jours que les individus qui tentent de sortir frauduleusement un produit hors d'une zone protégée ou qui tentent d'introduire un tel produit, utilisent souvent les chaussures pour dissimuler le produit en question. Ce phénomène semble dû essentiellement au fait que cette zone est difficile à contrôler visuellement ou par palpage manuel.

Toutefois, il apparaît que les scanners corporels conventionnels ne sont pas capables de détecter de tels produits, en raison de l'épaisseur de l'empeigne de la chaussure qui forme un bouclier et ne permet pas de déterminer, sur la base des technologies actuelles, la forme du pied et donc d'identifier des objets cibles.

C'est pourquoi il arrive que des opérateurs requièrent que les individus souhaitant pénétrer ou sortir d'une zone sensible se déchaussent, afin de tenter d'améliorer l'inspection. Mais malgré les contraintes et l'inconfort résultant d'une telle situation, un examen visuel de la chaussure retirée ne permet pas toujours de totalement sécuriser l'inspection. L'opérateur ne peut pas en effet déterminer si un objet ou une matière n'est pas camouflé dans une cavité interne non directement accessible de la chaussure, notamment la semelle de celle-ci.

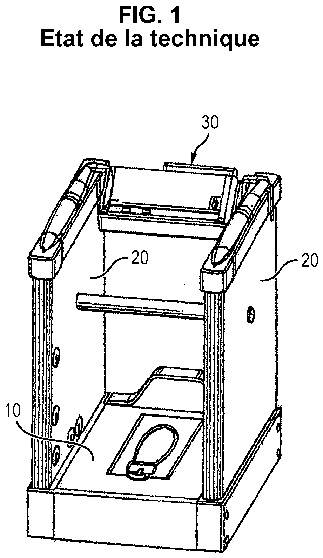

Le demandeur a donc proposé des dispositifs du type illustré sur la figure 1 annexée, qui comprennent un bâti qui comporte :

- une embase 10 formée d'un plateau rectangulaire en forme de marche dont la surface supérieure plane comporte un dessin ou empreinte 12 et une butée 14 destinés à accueillir et positionner un pied unique d'un individu revêtu d'une chaussure,
- deux panneaux latéraux symétriques 20 qui logent des moyens de détection, et
- un module d'informations 30.

On trouvera des exemples du dispositif illustré sur la figure 1 dans les documents FR 2 860 631, EP 1 574 879, FR 2 889 338 et FR 2 911 212.

Les moyens de détection décrits dans les documents mentionnés peuvent être formés de bobinages pour la détection de métaux, de moyens de prélèvement, par exemple sous forme de buses d'aspiration, pour le prélèvement de vapeurs ou de traces de particules, par exemple de stupéfiants ou d'explosifs, de moyens d'analyse à base de résonance magnétique nucléaire comprenant par exemple des bobines d'Helmholtz, ou encore des moyens d'analyse d'impédances complexes ou des détecteurs de radiations radioactives.

Le document US 2014/0320331 quant à lui propose d'ajouter dans un scanner corporel conventionnel un socle équipé d'un réseau d'antennes émettant des ondes électromagnétiques en direction de la paroi supérieure du socle. Les ondes électromagnétiques sont alors réfléchies vers l'intérieur du socle par la chaussure afin d'être reçues par les antennes. Un processeur est alors capable de détecter la présence d'objets cibles dans la chaussure.

Le document US69752332 décrit un procédé pour déterminer l'adaptation correcte d'une chaussure, le procédé comprenant la prise d'une image infrarouge thermique d'une chaussure sur un pied.

Le document US2005116825 divulgue un dispositif destiné à recevoir un seul pied portant une chaussure pour détecter un objet interdit, le dispositif utilisant des moyens de détection électromagnétique.

Ce dispositif permet ainsi d'améliorer la détection des objets cibles lorsqu'ils sont cachés dans les chaussures. Cette détection semble toutefois trouver une limite lorsque les objets cibles comprennent un diélectrique, tel qu'un explosif, qui est positionné suivant une épaisseur constante dans la chaussure. Le détecteur ne peut en effet distinguer la réponse obtenue par les antennes lorsque la chaussure présente semelle épaisse et celle obtenue lorsque la semelle est fine mais est recouverte d'une épaisseur constante d'explosifs.

RESUME DE L'INVENTION

Un objectif de l'invention est donc de proposer de nouveaux moyens de détection permettant d'améliorer la détection d'objets cibles, tels que des objets ou matières non autorisés dans une zone à accès protégé, susceptibles d'être camouflés dans une chaussure.

Pour cela, l'invention propose un procédé d'inspection d'une chaussure portée par un pied d'un individu, la chaussure comprenant une semelle comportant une face inférieure destinée à venir en contact avec un sol et le procédé comprenant les étapes suivantes :

- acquérir une image thermique de la chaussure lorsqu'elle est portée par un pied de l'individu à l'aide d'une caméra thermique,
- déterminer, à partir de l'image thermique de la chaussure, une limite inférieure du pied de l'individu, ladite limite inférieure correspondant à une face inférieure du pied,
- déterminer une position de la chaussure par rapport à la caméra thermique au moment de l'acquisition de l'image thermique, et
- déduire de la position de la chaussure par rapport à la caméra et de la limite inférieure du pied, une distance entre la face inférieure de la semelle et la face inférieure du pied de l'individu.

Certaines caractéristiques préférées mais non limitatives du procédé d'inspection défini ci-dessus sont les suivantes, prises individuellement ou en combinaison :

- au cours de l'étape d'acquisition de l'image thermique, la caméra thermique est orientée en direction du talon du pied de l'individu de sorte que l'image thermique obtenue comprenne ledit talon.
- l'image thermique est une matrice bidimensionnelle comprenant N lignes de pixels et M colonnes de pixels, dans laquelle à chaque pixel correspond une valeur d'une intensité de rayonnement.
- l'étape de détermination de la limite comprend les sous-étapes suivantes : pour les N lignes de pixels, calculer une moyenne des valeurs des pixels appartenant à une même ligne afin d'obtenir une colonne de N pixels moyennés, calculer une dérivée des pixels moyennés et identifier le pixel correspondant au pic des dérivées ainsi calculées.
- l'étape de déduction de la distance comprend une sous-étape au cours de laquelle on identifie le pixel moyenné dont la valeur est la plus faible.

- l'étape de déduction de la distance comprend en outre les sous-étapes suivantes : calculer une différence en multiples de pixel entre le pixel correspondant au pic des dérivées et le pixel moyenné dont la valeur est la plus faible, déterminer un facteur linéaire, en fonction de la position de la chaussure par rapport à la caméra thermique et multiplier la différence ainsi obtenue par le facteur linéaire
- le pic des dérivées est déterminé parmi les dérivées correspondant aux pixels s'étendant entre le pixel moyenné dont la valeur est la plus faible et les pixels moyennés s'étendant au-dessus dudit pixel moyenné dont la valeur est la plus faible.
- le procédé comprend en outre une sous-étape au cours de laquelle on applique un filtre passe-bas aux pixels moyennés avant de calculer leur dérivée.
- le procédé comprend en outre les étapes suivantes : déceler une stratification par empilement vertical, dans la semelle, par détection d'échos successifs suite à une émission d'ondes vers la semelle, normaliser la stratification ainsi décelée à partir de la distance entre la face inférieure du pied et la face inférieure de la semelle obtenue au cours de l'étape de déduction et comparer la valeur de la stratification ainsi normalisée avec un seuil d'alarme et déclencher une alarme en cas de dépassement.
- le procédé comprend en outre les étapes suivantes : déceler une stratification par empilement vertical, dans la semelle, par détection d'échos successifs suite à une émission d'ondes vers la semelle, identifier parmi les échos successifs l'écho de plus forte amplitude, déterminer un temps de transmission et de réflexion de l'écho de plus forte amplitude, en déduire une hauteur entre la stratification correspondant à l'écho de plus forte amplitude et la face inférieure de la semelle et comparer la hauteur ainsi déduite avec la distance entre la face inférieure du pied et la face inférieure de la semelle obtenue au cours de l'étape de déduction et, le cas échéant, déclencher une alarme.
- le procédé comprend en outre les étapes suivantes : mesurer une capacité électrique formée par la semelle de la chaussure placée sur l'embase, normaliser la capacité électrique ainsi mesurée à partir de la distance entre la face inférieure du pied et la face inférieure de la semelle obtenue au cours de l'étape de déduction et comparer la valeur de la capacité électrique ainsi normalisée à un seuil d'alarme et déclencher une alarme en cas de dépassement.
- le procédé comprend en outre les étapes suivantes : mesurer une capacité électrique formée par la semelle de la chaussure placée sur l'embase, en déduire une hauteur entre la face inférieure du pied et la face inférieure de la semelle et comparer la hauteur ainsi déduite avec la distance entre la face inférieure du pied et la face inférieure de la semelle obtenue au cours de l'étape de déduction et, le cas échéant, déclencher une alarme.

Selon un deuxième aspect, l'invention propose également un système pour l'inspection d'une chaussure comprenant une semelle, lorsque la chaussure est portée par un individu, le système comprenant :

- une embase configurée pour recevoir au moins un pied d'un individu revêtu de la chaussure,
- une caméra thermique configurée pour acquérir une image thermique de la chaussure portée par l'individu,
- des moyens configurés pour déterminer une position de la chaussure par rapport à la caméra thermique et
- un processeur configuré pour déterminer, à partir de l'image thermique de la chaussure, une limite une limite inférieure du pied de l'individu, ladite limite inférieure correspondant à une face inférieure du pied, et déduire de la position de la chaussure par rapport à la caméra thermique et de la limite inférieure du pied une distance entre la face inférieure de la semelle et la face inférieure du pied de l'individu.

Certaines caractéristiques préférées mais non limitatives du système d'inspection défini ci-dessus sont les suivantes, prises individuellement ou en combinaison :

- la caméra thermique est fixée sur l'embase de sorte à acquérir une image d'un talon de la chaussure.
- le système est configuré pour inspecter deux chaussures portées par un individu et comprend deux caméras thermiques, chaque caméra étant configurée pour acquérir une image de l'une des chaussures.
- la caméra thermique est sensible aux ondes ayant des longueurs d'onde de l'ordre de la dizaine de micromètres, de préférence entre huit micromètres et quatorze micromètres.
- lorsque l'embase est posée sur un sol, un champ angulaire de la caméra thermique dans un plan perpendiculaire au sol est plus grand qu'un champ angulaire de la caméra thermique suivant un plan horizontal parallèle au sol.
- l'image thermique est une matrice bidimensionnelle comprenant N lignes de pixels et M colonnes de pixels, où N est supérieur à M.
- les moyens configurés pour déterminer la position de la chaussure par rapport à la caméra infrarouge comprennent l'un au moins des éléments suivants : une butée mécanique fixe par rapport à la caméra thermique et configurée pour venir en contact avec une partie de la chaussure pendant l'inspection, un marquage visuel, un ensemble de cellules photoélectriques configurées pour émettre et/ou recevoir un faisceau optique, ledit ensemble étant fixé sur deux parois en regard du système configurées pour être positionnées de part et d'autre de la chaussure, un ensemble d'antennes configurées pour émettre et/ou recevoir un champ magnétique, ledit ensemble étant fixé dans un socle du système et/ou au moins un émetteur infrarouge et un récepteur infrarouge et un dispositif d'analyse du temps aller-retour des ondes infrarouges entre l'émetteur et le récepteur.

- Selon un troisième aspect, l'invention propose un ensemble de détection comprenant un système comme décrit ci-dessus et l'un au moins parmi les détecteurs suivants :
- un scanner corporel comprenant des moyens de détection d'un objet cible à l'aide d'une ou plusieurs énergie de rayonnement modulées ou émises par le corps des individus inspectés,
- un dispositif détecteur comprenant des moyens adaptés pour déceler une stratification par empilement vertical, dans la semelle, par détection d'échos successifs suite à une émission d'ondes vers la semelle,
- des moyens de mesure d'une capacité électrique formée par la semelle de la chaussure.

BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

La figure 1 précédemment décrite représente un dispositif détecteur pour l'inspection d'une chaussure conforme à l'état de la technique.
La figure 2 est une image thermique d'un individu prise de face, sur laquelle on voit l'individu debout.
Les figures 3a et 4a sont des photographies prises de profil de deux exemples de chaussure.
La figure 3b est une image thermique de la chaussure de la figure 3a obtenue à l'aide d'une caméra infrarouge.
La figure 3c correspond à l'image thermique de la figure 3a après application d'un filtre passe-bas.
Les figures 3d et 4b correspondent aux images thermiques des figures 3a et 4a, respectivement, après avoir appliqué un filtre passe-bas et modifié l'échelle des températures.
Les figures 3e et 4c sont des vues arrière des chaussures des figures 3a et 4a, respectivement,
La figure 3f est une image thermique de la chaussure de la figure 3e obtenue à l'aide d'une caméra infrarouge.
La figure 3g correspond à l'image thermique de la figure 3e après application d'un filtre passe-bas.
Les figures 3h et 4d correspondent aux images thermiques des figures 3e et 4c, respectivement, après avoir appliqué un filtre passe-bas et modifié l'échelle des températures.
La figure 5a illustre un exemple de graphe représentant la valeur (température, en Kelvin) d'une colonne de pixels moyennés et auxquels un filtre passe-bas a été appliqué.

La figure 5b est un graphe représentant la dérivée des valeurs (dérivée de la température en fonction des pixels) de la figure 5a.

La figure 6 illustre un premier exemple de système d'inspection conforme à l'invention sous la forme d'un scanner corporel.

La figure 7 illustre un deuxième exemple de système d'inspection conforme l'invention sous la forme d'un dispositif d'inspection de chaussures.

La figure 8 illustre un deuxième exemple de système d'inspection conforme l'invention sous la forme d'un dispositif d'inspection d'une chaussure.

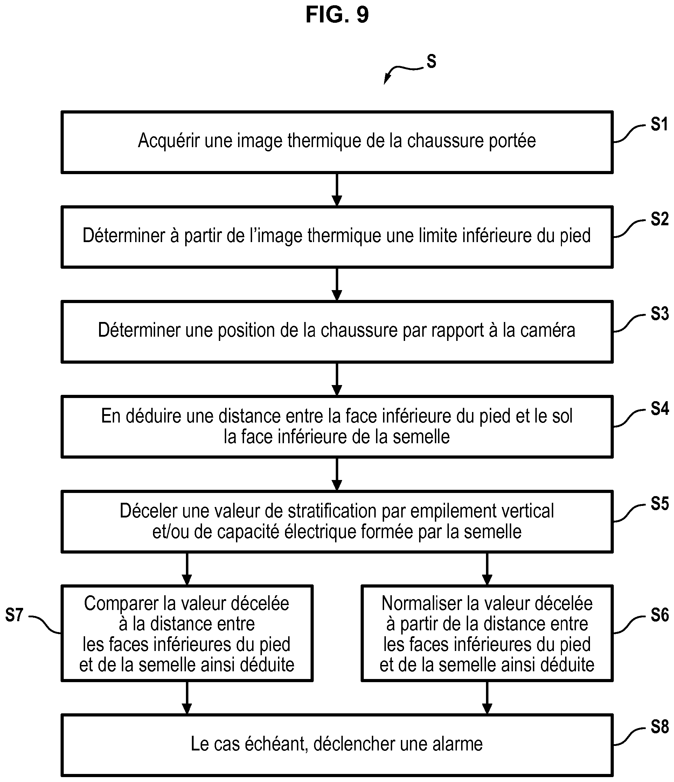

La figure 9 est un organigramme illustrant les étapes d'un procédé d'inspection conforme à un mode de réalisation de l'invention.

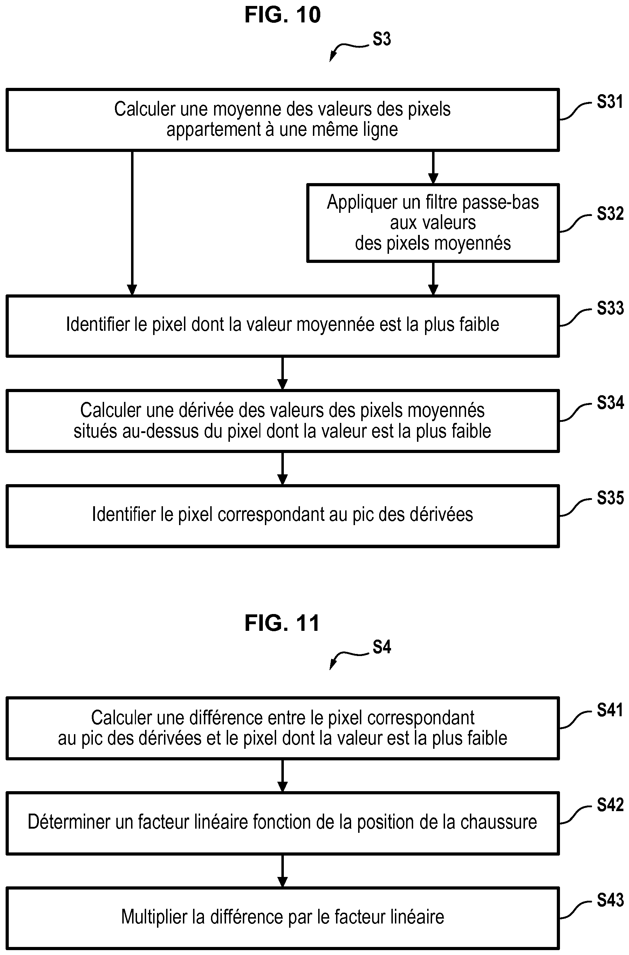

La figure 10 est un organigramme illustrant des exemples de sous-étapes permettant de déterminer, à partir d'une image thermique, la limite inférieure du pied de l'individu.

La figure 11 est un organigramme illustrant des exemples de sous-étapes permettant de déduire de la limite inférieure du pied et de la distance entre la chaussure et la caméra thermique une distance entre la face inférieure de la semelle et la face inférieure du pied de l'individu.

## DESCRIPTION DETAILLEE D'UN MODE DE REALISATION

Afin de détecter des objets cibles, l'invention propose d'utiliser une ou plusieurs caméras thermiques 7 pour déterminer une distance 6 (suivant un axe normal au sol) entre un sol et la face inférieure du talon du porteur et d'utiliser cette information pour détecter la présence éventuelle d'un objet cible dans la chaussure 2. Cette distance 6 correspond à l'épaisseur de la semelle 3, lorsque l'individu ne transporte pas d'objet cible entre le pied et la semelle 3.

Par caméra thermique 7 (également connue sous la désignation de caméra infrarouge) on comprendra ici un dispositif configuré pour enregistrer des rayonnements infrarouges émis par un corps et qui varient en fonction de leur température.

Des caméras thermiques 7 ont déjà été utilisées dans l'inspection d'individus. Toutefois, dans la mesure où une caméra thermique 7 ne permet pas d'obtenir une image précise des contours du corps d'un individu lorsque celui-ci est habillé, elles ne sont pour l'instant employées que dans la détection du franchissement d'une ligne (barrières infrarouges) ou pour déterminer une distance entre le dispositif et un objet. On pourra notamment se référer aux documents FR 2 950 976 ou US 2007/235652 qui décrivent de tels exemples d'utilisation.

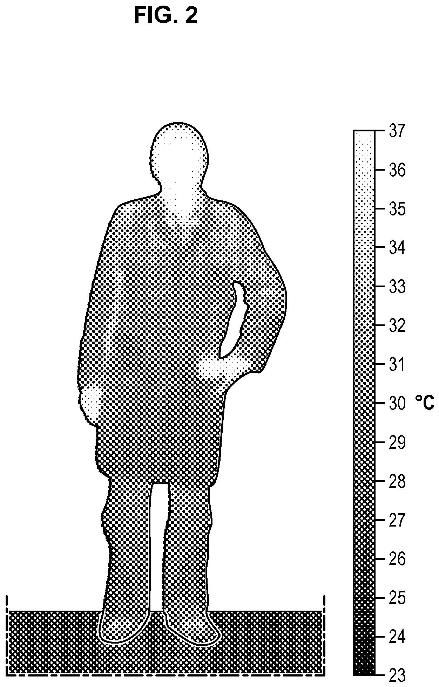

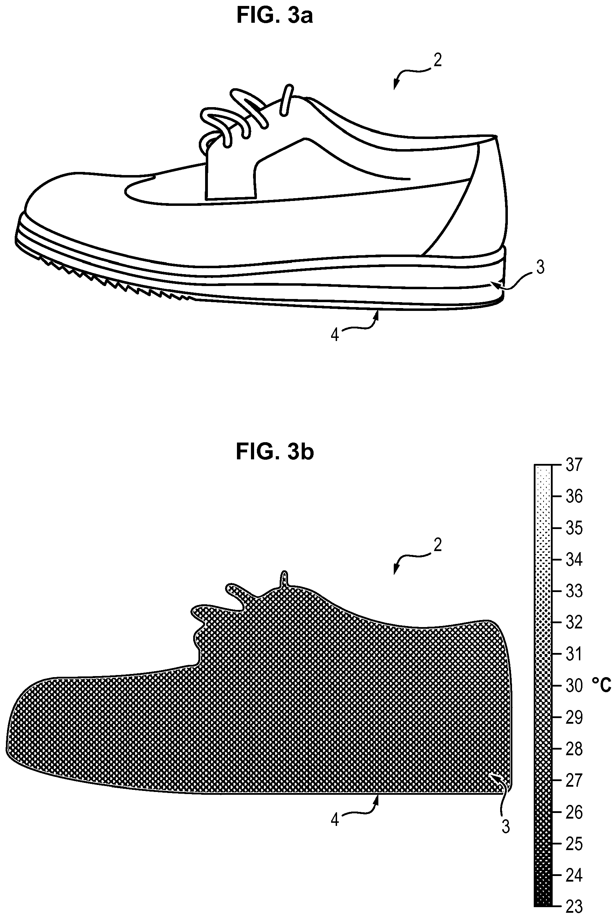

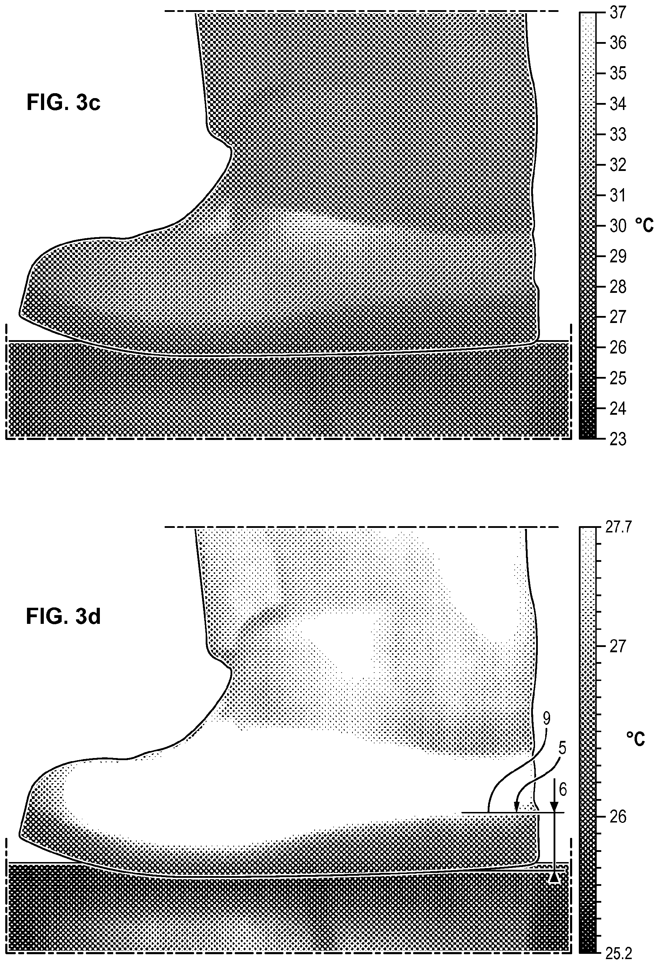

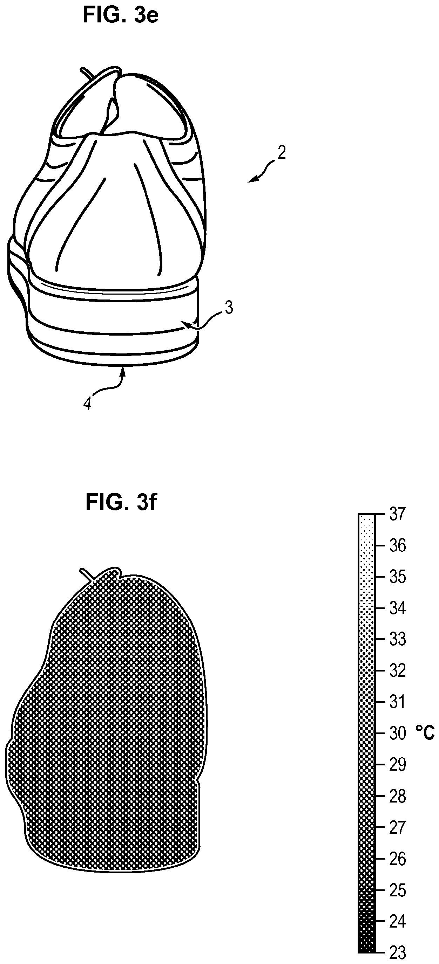

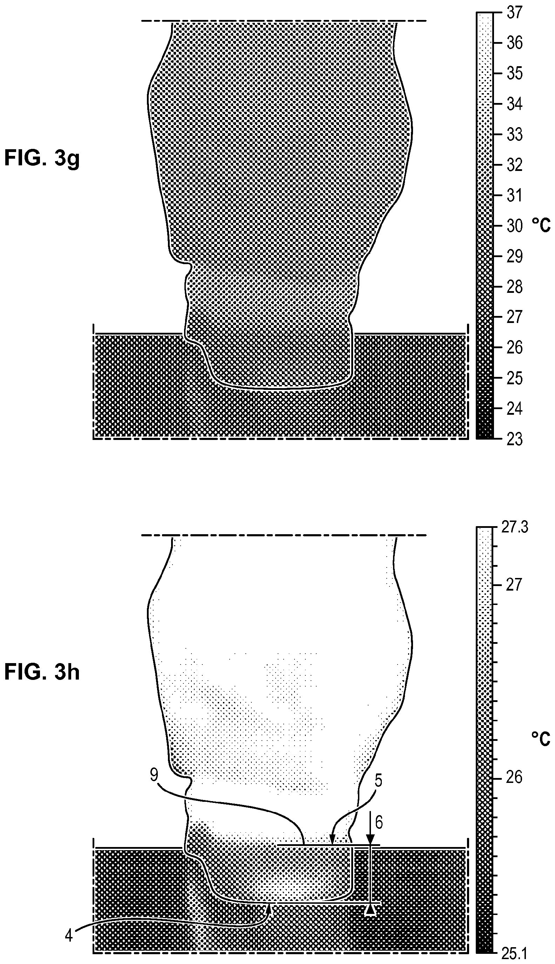

En effet, comme cela est visible sur la figure 2 annexée, une caméra thermique 7 enregistre les rayonnements infrarouges émis par le corps de l'individu. Or, les vêtements de l'individu sont nécessairement chauffés par celui-ci lorsqu'il les porte, ce qui empêche de déterminer le contour précis de son corps et donc la présence éventuellement d'objet cibles dissimulés sous ses habits. De plus, l'empeigne des chaussures 2 bloque la dissipation de la chaleur et réduit donc le rayonnement émis par les pieds, de sorte que la zone des pieds est encore plus difficile à distinguer sur les images thermiques prises par la caméra que le reste du corps. Cela ressort d'ailleurs clairement des figures 3b et 3f qui, comme nous le verrons par la suite, correspondent à des images thermiques d'une chaussure 2 portée par un individu, avant traitement par le processeur.

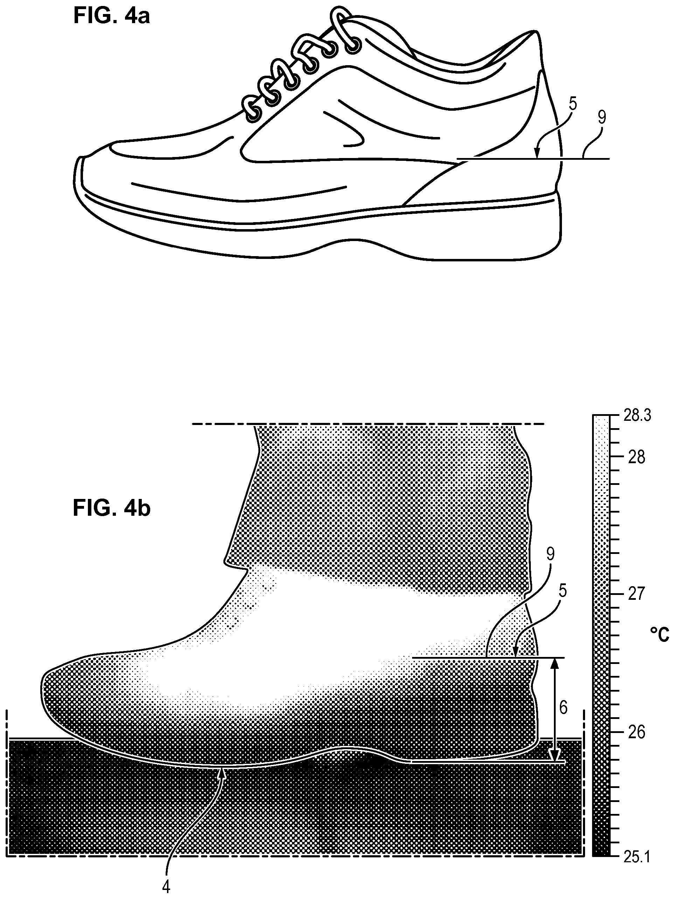

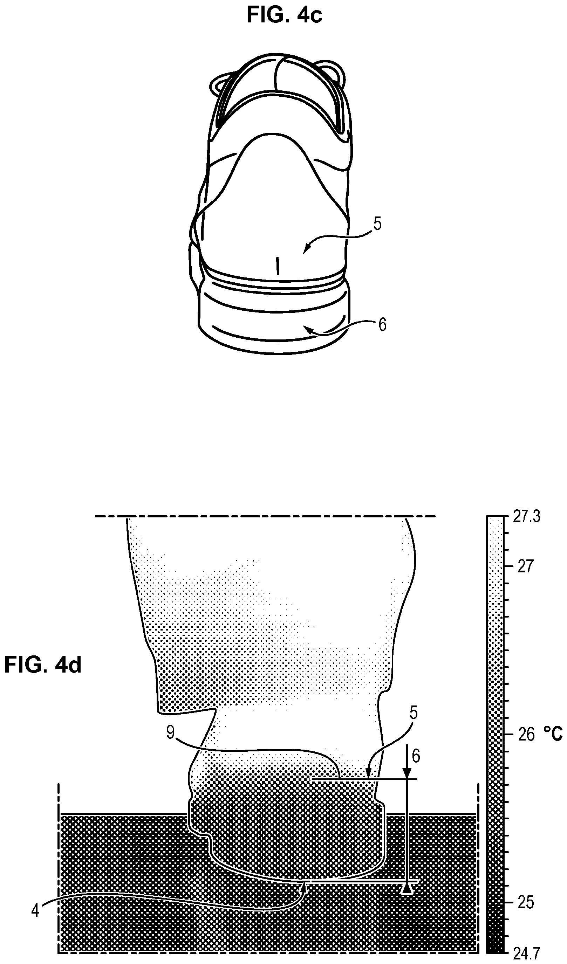

Le Demandeur s'est aperçu du fait que, contre toute attente, il était toutefois possible et avantageux d'utiliser une image thermique prise de la chaussure 2 portée par le pied de l'individu pour déterminer, avec précision, la distance 6 entre la face inférieure de son pied et le sol. Comme on peut le voir sur les figures 3e, 3h, 4b et 4d, après traitement des images, la limite entre la face inférieure du pied 5 et le sol est en effet suffisamment précise pour en déduire cette distance 6.

Un système 1 pour l'inspection d'une chaussure 2 conforme à l'invention comprend ainsi les éléments suivants :

-    une embase 10 configurée pour recevoir au moins un pied d'un individu revêtu de la chaussure 2,
-    une caméra thermique 7 configurée pour acquérir une image thermique de la chaussure 2 portée par l'individu,
-    des moyens 15 configurés pour déterminer une position de la chaussure 2 par rapport à la caméra thermique 7 et
-    un processeur 16 configuré pour déterminer, à partir de l'image thermique de la chaussure 2, une limite 9 une limite 9 inférieure du pied de l'individu, ladite limite 9 inférieure correspondant à une face inférieure du pied 5, et déduire de la position de la chaussure 2 par rapport à la caméra thermique 7 et de la limite 9 inférieure du pied une distance 6 entre la face inférieure 4 de la semelle 3 et la face inférieure du pied 5 de l'individu.

Par semelle 3, on comprendra ici la partie de la chaussure 2 qui est en contact avec le sol. Elle comporte à cet effet une face inférieure 3, qui est en contact direct avec le sol, une face supérieure, configurée pour venir en contact avec la face inférieure du pied 5 d'un individu (ou, le cas échéant, l'objet cible, lorsque ledit objet est placé entre le pied et la semelle 3). Selon les chaussures 2, la limite 9 inférieure du pied est visible depuis l'extérieur (cas de l'exemple illustré sur les figures 3a à 3h), ou masquée (cas des chaussures 2 compensées telles que celle illustrée en figures 4a à 4d).

La structure générale du système 1 peut être de tout type.

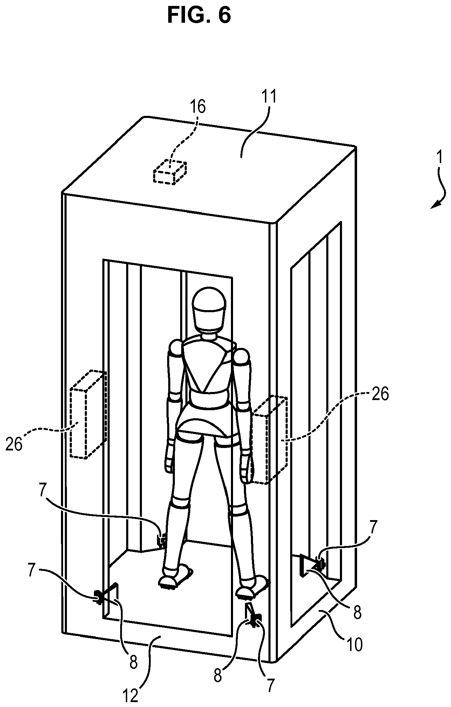

La structure du système 1 pourra par exemple correspondre à celle d'un scanner corporel, comme décrit dans les documents EP 2 202 700, US 2014/0320331 ou encore US 2007/0235652 et illustré à titre d'exemple non limitatif en figure 6.

Plus précisément, le système 1 peut comprendre une embase 10 comportant au moins deux panneaux latéraux 20 symétriques dans lesquels sont logés des moyens de détection 26, et notamment d'énergie de rayonnement du type rayons X, microondes, ondes millimétriques, lumière infrarouge, ondes térahertz ou encore ultrasons. D'autres moyens de détection peuvent bien entendu être envisagés, en plus ou en alternative des moyens de détection d'énergies de rayonnement, et notamment des bobinages pour la détection de métaux, des moyens de prélèvement, par exemple sous forme de buses d'aspiration, pour le prélèvement de vapeurs ou de traces de particules, par exemple de stupéfiants ou d'explosifs, des moyens d'analyse à base de résonance magnétique nucléaire comprenant par exemple des bobines d'Helmholtz, ou encore des moyens d'analyse d'impédances complexes ou des détecteurs de radiations radioactives.

Typiquement, l'embase 10 peut former un sas ou plus simplement une porte.

Optionnellement, l'embase 10 peut en outre comprendre une traverse 11 reliant les panneaux en partie supérieure, au-dessus de la tête de l'individu, et/ou un socle 12, sur lequel marche l'individu.

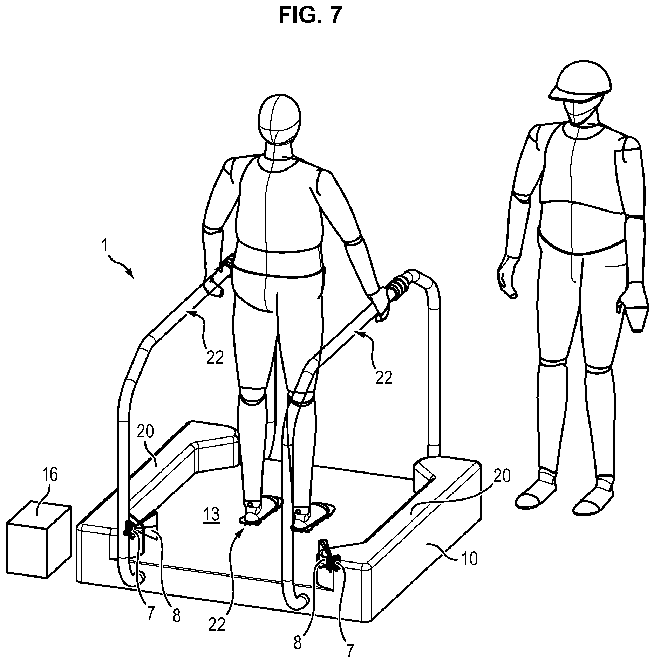

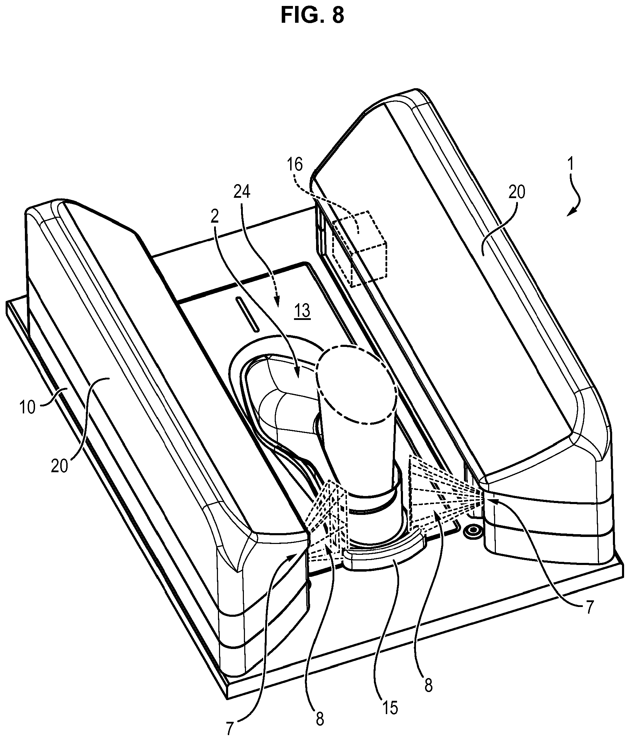

En variante, la structure générale du système 1 peut correspondre à celle habituellement utilisée dans les dispositifs d'inspections d'une chaussure 2 tels que ceux décrit dans les documents FR 2 860 631, EP 1 574 879, FR 2 889 338 et FR 2 911 212 et illustrés à titre d'exemple non limitatif en figures 7 et 8. La structure générale de ces dispositifs ne sera pas décrite dans le détail par la suite. On rappelle cependant que l'on retrouve sur ces figures un dispositif comprenant :

- une embase 10 support formée d'un plateau 13 en forme de marche destiné à accueillir et positionner un pied revêtu d'une chaussure 2, et
- deux panneaux latéraux 20 symétriques qui logent des moyens de détection et,
- optionnellement, un module d'information.

Le dispositif représenté sur ces figures peut être conforme quant à sa géométrie, ses dimensions, la nature des messages affichés sur le module d'information, aux dispositions décrites dans les documents précités.

Il en est de même d'éventuels accessoires type moyens de tri aléatoire d'individus soumis à l'analyse, des fréquences mises en oeuvre pour détecter les métaux et/ou d'installation d'un pied contre les deux panneaux pour initier le traitement.

Dans une forme de réalisation, le dispositif comprend l'un au moins des moyens de détection suivants :

- des moyens 24 adaptés pour déceler une stratification par empilement vertical, dans la semelle 3, par détection d'échos successifs suite à une émission d'ondes vers la semelle 3, et/ou
- des moyens de mesure d'une capacité électrique formée par la semelle 3 de la chaussure 2. Par exemple, ces moyens de mesure peuvent comprendre des électrodes 22 placées au niveau de l'empreinte et des électrodes 22 placées en partie supérieure des panneaux latéraux 20. Ils seront définis plus en détail par la suite.

Les moyens 15 configurés pour déterminer la position de la chaussure 2 par rapport à la caméra thermique 7 peuvent notamment comprendre une butée mécanique fixe par rapport à la caméra thermique 7 et configurée pour venir en contact avec une partie de la chaussure 2 pendant l'inspection. Typiquement, la butée mécanique peut être positionnée de manière à venir en contact avec la pointe de la chaussure 2 ou son talon. Comme on le verra par la suite, la butée mécanique 15 est de préférence positionnée de manière à recevoir une partie arrière du talon, afin que la position du talon de l'individu soit déterminable avec précision. Dans cette forme de réalisation, la butée mécanique est de préférence positionnée et dimensionnée de manière à ne pas gêner la capture des images thermiques par la caméra thermique 7.

La butée mécanique peut notamment être fixée sur le socle 12 du scanner corporel ou sur le plateau 13 du dispositif d'inspection.

Dans l'exemple de réalisation illustrée sur la figure 8, la butée mécanique est un muret fixé sur le plateau 13 du dispositif détecteur. Le muret est incurvé pour épouser la forme du talon et permettre de fixer la position axiale (selon la direction d'insertion du pied dans le dispositif) et l'orientation du pied dans le dispositif.

En variante, les moyens 15 configurés pour déterminer la position de la chaussure 2 par rapport à la caméra peuvent comprendre l'un au moins des éléments suivants :

- un marquage visuel (tel qu'une empreinte de pas), placé sur le socle 12 du scanner corporel ou sur le plateau 13 du dispositif d'inspection. Le marquage visuel peut être intégré ou fixé de manière non amovible sur le socle 12 (ou le plateau 13) ou projeté à l'aide d'un projecteur d'image.
- un ensemble d'antennes configurées pour émettre et/ou recevoir un champ magnétique. Les antennes peuvent être fixé dans ou sous le socle 12 du scanner corporel (ou dans ou sous le plateau 13 du dispositif d'inspection).
- un ensemble de cellules photoélectriques configurées pour émettre et/ou recevoir un faisceau optique, ledit ensemble étant fixé sur deux parois en regard du système 1 configurées pour être positionnées de part et d'autre de la chaussure 2 de sorte qu'un faisceau optique émis par une cellule émettrice en direction d'une cellule réceptrice en regard soit interrompu par la présence du pied de l'individu.

- au moins un couple d'émetteur/récepteur infrarouge et un dispositif d'analyse du temps aller-retour des ondes infrarouges entre l'émetteur et le récepteur.

Par exemple, les émetteurs (photoélectriques ou infrarouges) peuvent être logés dans l'un des panneaux latéraux 20 du système 1 (qu'il s'agisse des panneaux latéraux 20 du scanner corporel ou du dispositif d'inspection), tandis que les récepteurs peuvent être logés dans l'autre panneau latéral 20. En variante, les émetteurs et les récepteurs peuvent être logés à la fois dans les deux panneaux latéraux 20.

On comprendra bien entendu que chacun des exemples de moyens 15 de détermination de la position du pied peuvent être utilisés seuls ou en combinaison. Typiquement, le système 1 peut comprendre à la fois un marquage visuel et une butée mécanique.

La caméra thermique 7 est sensible aux ondes ayant des longueurs d'onde de l'ordre de la dizaine de micromètres, de préférence entre huit micromètres et quatorze micromètres.

La caméra thermique 7 peut être un appareil de prise de vues capable de prendre des images fixes (photographies) ou animées (film).

La caméra thermique 7 peut être fixée sur l'embase 10 du système 1.

Dans une forme de réalisation, la caméra thermique 7 est positionnée sur l'embase 10 de manière à acquérir une image thermique de l'arrière de la chaussure 2 de l'individu. De préférence, l'image thermique comprend le talon de la chaussure 2. En effet, le Demandeur s'est aperçu du fait que cette partie de la chaussure 2 diffusait davantage et de manière plus préciser le rayonnement infrarouge du pied et permettait d'obtenir des résultats plus précis (voir les figures 3e à 3h, 4b et 4d). Le Demandeur explique ce phénomène par le fait que la chaussure 2 est en contact intime avec le talon de l'individu, alors que la partie avant est moins ajustée afin de laisser de la place à ses orteils. La transmission du rayonnement infrarouge se fait donc mieux au niveau du talon, ce qui permet d'obtenir une image plus nette du talon que de la partie avant du pied avec la caméra thermique 7 et donc de déterminer avec plus de précision la limite 9 entre la face inférieure du pied 5 et la semelle 3 de la chaussure 2.

Lorsque l'embase 10 est posée sur un sol, un champ angulaire 8 de la caméra thermique 7 dans un plan perpendiculaire au sol est plus grand qu'un champ angulaire 8 de la caméra thermique 7 suivant un plan horizontal parallèle au sol. En d'autres termes, l'image thermique est plus haute que large. Cette configuration est particulièrement adaptée lorsque la caméra thermique 7 acquiert une image thermique du talon de la chaussure 2 puisque cette zone du corps est étroite et que l'on cherche à identifier la limite 9, suivant un axe normal au sol, entre le pied et la chaussure 2. On pourra notamment se reporter aux figures 6 à 8 qui illustrent les champs angulaires 8 des caméras.

Dans une forme de réalisation, l'image thermique est une matrice bidimensionnelle comprenant N lignes de pixels et M colonnes de pixels, où N est strictement supérieur à M. Par exemple, N peut être égal à 320 tandis que M peut être égal à 240.

Le cas échéant, le système 1 peut comprendre deux caméras thermiques 7 fixées sur l'embase 10, chaque caméra thermique 7 étant configurée pour acquérir une image de l'une des chaussures 2 de l'individu. Les deux chaussures 2 de l'individu peuvent donc être inspectées simultanément (voir figure 6 à 8).

De manière optionnelle, le système 1 peut en outre comprendre au moins une caméra thermique 7 supplémentaire configurée pour acquérir une image thermique supplémentaire de la chaussure 2. Par exemple, l'une des caméras peut acquérir une image thermique du talon tandis que l'autre des caméras acquiert une image thermique de l'avant de la chaussure 2.

Bien entendu, le système 1 peut comprendre quatre caméras thermiques 7, à savoir deux caméras thermiques 7 pour chaque chaussure 2, comme cela est illustré sur l'exemple de réalisation de la figure 6.

Le processeur 16 peut être logé dans l'embase 10 du système 1 ou à distance de celle-ci, dans la même pièce ou dans un autre lieu, avec ou sans fil, et être connecté à la caméra thermique 7 et le cas échéant aux moyens 15 de détermination de la position de la chaussure 2 par rapport à la caméra thermique 7.

Le processeur 16 peut en outre comprendre une mémoire afin d'enregistrer, au moins temporairement, les images thermiques prises par la caméra thermique 7 ainsi que les éventuelles cartographies des matériaux de référence recherchés (notamment lorsque le détecteur comprend des moyens de mesure d'une capacité électrique formée par la semelle 3 de la chaussure 2).

Nous allons à présent décrire des étapes pouvant être mises en oeuvre pour l'inspection S d'au moins une chaussure 2 portée par un individu. Dans ce qui suit, pour simplifier la description, les moyens 15 de détermination de la position de la chaussure 2 comprennent un marquage visuel sous la forme d'une empreinte de pas formée sur l'embase 10 associée le cas échéant d"une butée mécanique. Au moment de l'acquisition de l'image thermique, la position de la chaussure 2 par rapport à la caméra thermique 7 est donc fixe et connue.

Par ailleurs, la caméra thermique 7 est placée de manière à acquérir une image thermique comprenant le talon de la chaussure 2.

Au cours d'une première étape S1, l'individu se positionne dans le système 1.

Lorsque le système 1 comprend un scanner corporel, l'individu se place entre les deux panneaux latéraux 20, le cas échéant debout sur le socle 12, en positionnant ses pieds sur les empreintes. Dans l'exemple de réalisation de la figure 6, les moyens 15 de détermination de la position des pieds de l'individu ne comprennent en effet pas de butée mécanique, bien que cela soit envisageable.

Lorsque le système 1 comprend un dispositif détecteur (figures 7 et 8), l'individu positionne son ou ses pied(s) sur le plateau 13, sur l'empreinte et le cas échéant contre la butée mécanique associée.

Au cours d'une deuxième étape S2, la caméra thermique 7 acquiert une image thermique de la chaussure 2, portée par l'individu.

L'image thermique est une matrice bidimensionnelle comprenant N lignes de pixels et M colonnes de pixels, dans laquelle à chaque pixel correspond une valeur d'une intensité de rayonnement.

Au cours d'une troisième étape S3, la limite 9 inférieure du pied de l'individu est déterminée. Cette limite 9 inférieure correspond à la position de la face inférieure du pied 5 dans la chaussure 2, qui peut être la face supérieure de la semelle 3 lorsque l'individu ne transporte pas d'objet cible dans sa chaussure 2 ou la face supérieure de l'objet cible lorsque l'individu dissimule un tel objet cible par-dessus la semelle 3.

Pour cela, au cours d'une première sous-étape S31, le processeur 16 calcule, pour les N lignes de pixels, une moyenne des valeurs des pixels appartenant à une même ligne afin d'obtenir une colonne de N pixels moyennés (ci-après pix(i), avec $i \in [1; N]$). Le cas échéant, le processeur 16 peut, préalablement à cette étape S31, sélectionner une zone de l'image thermique comprenant le talon de l'individu.

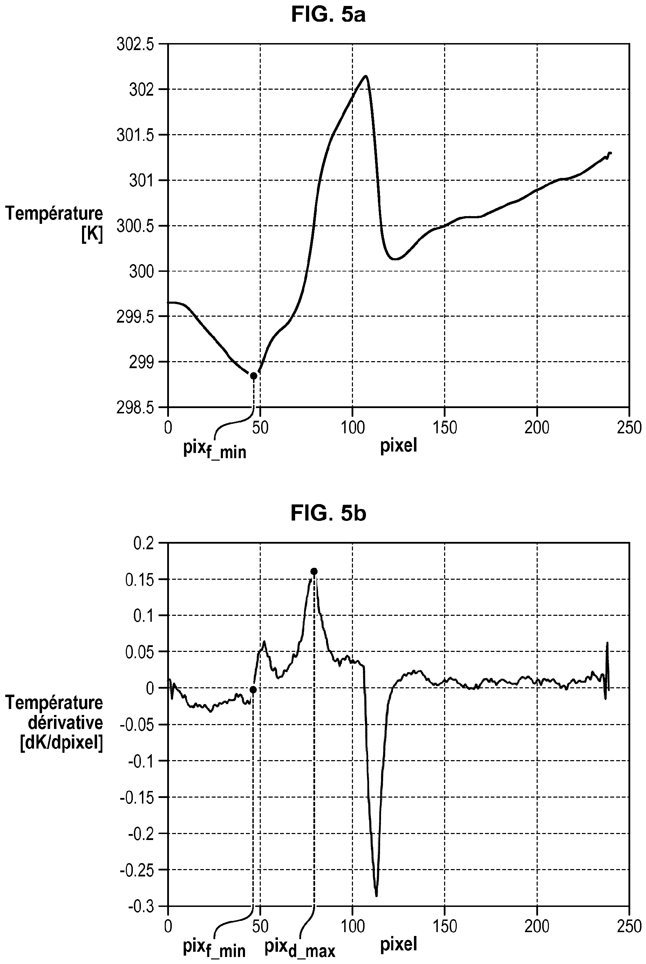

De manière optionnelle, comme illustré en figure 5a, le processeur 16 peut appliquer un filtre passebas aux N pixels moyennés (étape S32). Par exemple, le processeur 16 peut, pour un pixel pix(i) moyenné, effectuer la moyenne des valeurs de ce pixel avec les valeurs des trois pixels situés immédiatement au-dessus et des trois pixels situés immédiatement en-dessous dans la colonne de pixels moyennés afin d'obtenir des pixels moyennés et filtrés $pix_f(i)$ :

$$pix_f(i) = \frac{1}{7} \sum_{k=i-3}^{k=i+3} pix(k)$$

Au cours d'une deuxième sous-étape S33, le processeur 16 identifie le pixel moyenné $pix_{min}$ (ou le cas échéant le pixel moyenné $pixf_{\_min}$ après application du filtre passe-bas) dont la valeur est la plus faible. Ce pixel $pix_{min}$ correspond à la zone sur l'image thermique associée à la face inférieure 4 de la semelle 3. En effet, sur une image thermique, comme cela est visible notamment sur les figures 2, 3d, 3h, 4b et 4d, le sol réfléchit les rayonnements infrarouges. Par ailleurs, la face inférieure 4 de la semelle 3 est la partie de la chaussure 2 qui est la plus éloignée du pied et du reste du corps de l'individu : c'est donc la partie qui émet le rayonnement infrarouge le plus faible. Par conséquent, sur l'image thermique, toutes les zones situées sous la face inférieure 4 de la semelle 3 correspondent à des rayonnements infrarouges réfléchis par le sol. Comme nous le verrons par la suite, la partie de l'image thermique qui s'étend sous le pixel $pix_{min}$ dont la valeur est la plus faible peut donc être écartée puisqu'elle ne représente pas le rayonnement émis par le pied de l'individu.

Au cours d'une troisième sous-étape S34, le processeur 16 calcule une dérivée des valeurs des pixels moyennés pix(i) (ou le cas échéant, des valeurs des pixels $pix_f(i)$ après application du filtre passe bas) afin d'obtenir des dérivées $pix_d(i)$.

$$pix_d(i) = \frac{pix(i+1) - pix(i)}{x}$$

où x est la hauteur d'un pixel pix(i). La figure 5b illustre par exemple la troisième sous-étape S33 appliquée à la courbe de la figure 5a.

En variante, la hauteur des pixels d'une caméra thermique 7 étant constante, on peut également calculer une différence entre la valeur des pixels adjacents.

De préférence, la dérivée n'est calculée que pour les pixels moyennés (pix(i)) qui sont situés au-dessus du pixel $pix_{min}$ dont la valeur du rayonnement infrarouge est la plus faible.

Au cours d'une quatrième sous-étape S35, le processeur 16 identifie le pixel $pix_{d\_max}$ correspondant au pic des dérivées $pix_d$ ainsi calculées. Ce pixel $pix_{d\_max}$ correspond alors à la limite 9 inférieure du pied de l'individu, c'est-à-dire à la face inférieure de son pied.

Le processeur 16 détermine alors, à partir de la limite 9 inférieure du pied de l'individu et de la distance entre la chaussure 2 et la caméra thermique 7, la distance 6 entre la face inférieure du pied 5 et la face inférieure 4 de la semelle 3 (étape S4).

Pour cela, au cours d'une première sous-étape S41, le processeur 16 détermine une différence Δ en multiples de pixels entre le pixel $pix_{d\_max}$ correspondant au pic des dérivées et le pixel moyenné $pix_{min}$ dont la valeur est la plus faible.

Par exemple, comme illustré sur la figure 5b, lorsque le pixel $pix_{d\_max}$ correspond au 79ème pixel en partant du bas de la colonne de pixels moyennés (pix(79)) et que le pixel moyenné $pix_{min}$ dont la valeur est la plus faible correspond au 46ème pixel moyenné (pix(46)), la différence Δ en multiple de pixels est égale à 79 - 46 = 33.

Au cours d'une deuxième sous-étape S43, le processeur 16 multiplie la différence Δ ainsi obtenue par un facteur linéaire K prédéterminé, qui dépend de la position de la chaussure 2 par rapport à la caméra thermique 7. Il s'agit ici d'un simple calcul trigonométrique afin de convertir en distance métrique le nombre de pixels entre le pixel $pix_{min}$ dont la valeur est la plus faible et le pixel $pix_{d\_max}$ correspondant au pic des dérivées. Dans notre exemple de réalisation, ce facteur linéaire K est prédéterminé et préenregistré, puisque la distance entre le talon de la chaussure 2 et la caméra thermique 7 est fixe et connue grâce à l'empreinte et e cas échéant à la butée mécanique (étape S42). Le facteur K est donc égal à la tangente de l'angle β entre le point le plus bas d'un pixel donné et le point le plus haut dudit pixel (autrement dit, la tangente de l'angle sous lequel la caméra thermique 7 voit un pixel donné) multipliée par la distance entre la face de la butée mécanique qui entre en contact avec la chaussure 2 et la caméra thermique 7 :

$$K = D.\tan(\beta)$$

Ainsi, dans notre exemple décrit ci-dessus, pour un facteur linéaire K égal à 1.25, on obtient une distance 6 égale à 41 mm.

En variante, lorsque la distance entre la chaussure 2 et la caméra thermique 7 n'est pas préenregistrée et est par exemple mesurée instantanément par des moyens dédiés, le processeur 16 détermine l'angle β en fonction de la distance mesurée par les moyens 15 de détermination de la position de la chaussure 2 puis calcule le facteur linéaire K (étape S42).

Le processeur 16 obtient ainsi la distance 6 (suivant un axe normal au sol, ou le cas échéant au socle 12 ou au plateau 13, selon l'application) entre la face inférieure du pied 5 de l'individu et la face inférieure 4 de la semelle 3 de la chaussure 2.

La distance 6 entre la face inférieure du pied 5 et la face inférieure 4 de la semelle 3 ainsi déterminée peut alors être utilisée afin de normaliser des informations obtenues par le système 1 ou pour compléter/confirmer la mesure de cette distance 6 qui a été effectuées en parallèle par d'autres moyens.

Par exemple, dans le cas du scanner corporel décrit dans le document US 2014/0320331, les ondes sont réfléchies par la face inférieure du pied 5 ou en variante par un objet cible placé dans la chaussure 2. Si l'objet cible est appliqué suivant une épaisseur uniforme sous le pied du porteur, les antennes ne peuvent pas le détecter. En revanche, en combinant les informations reçues par les antennes et la distance 6 déterminée à partir des images thermiques de la chaussure 2, le processeur 16 peut en revanche déterminer que la face inférieure du pied 5 est à une distance plus grande que prévu de la face inférieure 4 de la semelle 3 ou du matériau diélectrique détecté, et générer une alarme pour que le personnel de sécurité examine la chaussure 2.

Il en est de même dans le cas du dispositif d'inspection.

Notamment, la détermination de la distance 6 peut être utilisée afin de normaliser des signaux permettant de détecter la présence d'un matériau particulier au sein de la chaussure 2 et/ou à des fins de redondance afin d'améliorer la fiabilité du dispositif.

Par exemple, le système 1 de l'invention peut être utilisé dans un dispositif d'inspection pour la détection d'objets cibles comprenant des moyens adaptés pour déceler une stratification par empilement vertical S5 (c'est-à-dire suivant une direction normale au plateau 13), dans la semelle 3, par détection d'échos successifs suite à une émission d'ondes vers la semelle 3, afin de normaliser les signaux issus des moyens de détection de la stratification verticale.

Les moyens de détection de la stratification verticale peuvent notamment comprendre un ou plusieurs couples d'émetteurs et récepteurs micro-ondes adjacents 24, placés dans le plateau 13, sous l'empreinte. Les moyens récepteurs ainsi intégrés permettent de détecter les échos microondes sur les différentes interfaces ou stratifications résultant d'un empilement vertical de couches successives présentant des propriétés différentes de propagation à l'égard des micro-ondes, entre la surface inférieure 4 de la semelle 3 et la surface inférieure du pied 5. En d'autres termes, les moyens de détection de la stratification verticale permettent de déceler la présence de poche ou de matériau particulier au sein de la masse de la semelle 3, et donc d'identifier des objets cibles dissimulés dans la chaussure 2.

On pourra notamment se référer au document FR 16 55726 déposé le 15 avril 2016 au nom du Demandeur pour plus de détails sur la structure et le fonctionnement de ce type de détecteur.

En pratique, les ensembles émetteur/récepteurs micro-ondes permettent de détecter les échos renvoyés par les interfaces de matière résultant d'un empilement vertical au sein de la semelle 3 et de détecter la hauteur de ces interfaces par mesure du temps de transmission et de réception de ces échos.

L'écho principal (c'est-à-dire de plus forte amplitude) est celui produit par la face inférieure du pied 5 qui correspond à la face supérieure de la semelle 3 (ou le cas échéant, la face supérieure de l'objet cible).

Le temps et l'atténuation de cet écho principal peuvent alors être normalisés (étape S6) en les divisant par la distance 6 entre la face inférieure du pied 5 et la face inférieure 4 de la semelle 3 obtenue au cours de l'étape S4 de déduction, afin d'obtenir un délai/mm et une atténuation/mm, indépendants de l'épaisseur de la semelle 3. Le processeur 16 peut alors comparer le délai et l'atténuation normalisés à des seuils prédéterminés et déclencher le cas échéant une alarme en cas de dépassement(s) (étape S8).

Ainsi, une normalisation des temps de réception des échos sur les récepteurs en fonction de la distance 6 entre la face inférieure du pied 5 et la face inférieure 4 de la semelle 3 permet de faciliter la détection d'anomalie sur une semelle 3.

En variante ou en complément, une comparaison directe du temps de réception de cet écho principal avec la distance 6 déterminée à partir des images thermiques permet d'obtenir un test simple (étape S7).

En effet, pour une semelle 3 de faible épaisseur, le système 1 attend la réception d'un écho principal sur la surface inférieure du pied 5 après un temps de transmission et réflexion court. Inversement pour une semelle 3 de forte épaisseur, le système 1 attend la réception d'un écho principal sur la surface inférieure du pied 5 après un temps de transmission et réflexion plus important.

Cependant, si le système 1 détecte un écho principal après un temps de transmission et réflexion court alors que l'image thermique indique une semelle 3 de forte épaisseur, la présence d'une poche ou d'un corps étranger au sein de la semelle 3 peut être soupçonnée.

En variante ou en complément, dans une forme de réalisation, le système 1 de l'invention peut en outre comprendre des moyens de mesure de la capacité électrique formée par la semelle 3 de la chaussure 2 placée sur l'embase 10 (étape S5). Ces moyens de mesure de la capacité électrique peuvent, le cas échéant, être cumulés avec la détermination de la limite 9 de la face inférieure du pied 5 afin d'obtenir des données robustes et stables concernant la distance 6 effective entre la face inférieure du pied 5 et la face inférieure 4 de la semelle 3.

Les moyens de mesure de la capacité peuvent comprendre des électrodes 22 placées au niveau de l'empreinte et des électrodes 22 placées en partie supérieure des panneaux latéraux 20, par exemple au niveau de poignées (voir figure 7). Les poignées sont de préférence solidaires de l'embase 10 et peuvent être réalisées par un matériau électriquement conducteur noyé dans la masse des panneaux latéraux 20.

Le dispositif comprend en outre un générateur électrique, typiquement un générateur de courant alternatif, relié aux électrodes 22 précitées par l'intermédiaire d'un interrupteur en série.

La capacité définie entre les électrodes 22 sous l'empreinte et dans les poignées dépend essentiellement de la distance 6 entre la face inférieure du pied 5 et la face inférieure 4 de la semelle 3 de la chaussure 2. La valeur de l'impédance de cette capacité représentée par la semelle 3 est par ailleurs élevée par rapport à celle du corps humain intercalé entre les mêmes électrodes 22, de sorte que les moyens de mesure de la capacité permettent d'obtenir une mesure de la distance 6 entre la face inférieure du pied 5 et la face inférieure 4 de la semelle 3. La capacité ainsi déterminée peut être normalisée (étape S6) en la divisant par la distance 6 entre la face inférieure du pied 5 et la face inférieure 4 de la semelle 3 obtenue au cours de l'étape S4 de déduction, afin d'obtenir une capacité/mm indépendante de l'épaisseur de la semelle 3. Le processeur 16 peut alors comparer la capacité normalisée à un seuil prédéterminé et déclencher le cas échéant une alarme en cas de dépassement (étape S8).

En variante ou en complément, la distance 6 déterminée à partir de l'image thermique de la chaussure 2 peut également être comparée à la distance déterminée grâce aux moyens capacitifs (étape S7) et de déclencher éventuellement des alertes en cas de discordances entre les résultats (étape S78).

Ici encore, on pourra se référer au document FR 16 55726 pour plus de détails sur l'utilisation des moyens de mesure de la capacité afin de déterminer l'épaisseur de la semelle 3.

## Revendications

1. Procédé d'inspection d'une chaussure (2) portée par un pied d'un individu, la chaussure (2) comprenant une semelle (3) comportant une face inférieure destinée à venir en contact avec un sol et le procédé comprenant les étapes suivantes :

   - acquérir (S1) une image thermique de la chaussure (2) lorsqu'elle est portée par un pied de l'individu à l'aide d'une caméra thermique (7),
   - déterminer (S2), à partir de l'image thermique de la chaussure (2), une limite (9) inférieure du pied de l'individu, ladite limite (9) inférieure correspondant à une face inférieure (5) du pied;

   **caractérisé en ce que** le procédé comprend:

   - déterminer (S3) une position de la chaussure (2) par rapport à la caméra thermique (7) au moment de l'acquisition de l'image thermique, et
   - déduire (S4) de la position de la chaussure (2) par rapport à la caméra et de la limite (9) inférieure du pied, une distance (6) entre la face inférieure (4) de la semelle (3) et la face inférieure (5) du pied de l'individu.

2. Procédé selon la revendication 1 dans lequel, au cours de l'étape (S1) d'acquisition de l'image thermique, la caméra thermique (7) est orientée en direction du talon du pied de l'individu de sorte que l'image thermique obtenue comprenne ledit talon.

3. Procédé selon l'une des revendications 1 ou 2, dans lequel l'image thermique est une matrice bidimensionnelle comprenant N lignes de pixels et M colonnes de pixels, dans laquelle à chaque pixel correspond une valeur d'une intensité de rayonnement.

4. Procédé selon la revendication 3, dans lequel l'étape (S3) de détermination de la limite (9) comprend les sous-étapes suivantes :

   - pour les N lignes de pixels, calculer (S31) une moyenne des valeurs des pixels appartenant à une même ligne afin d'obtenir une colonne de N pixels moyennés, et
   - calculer (S34) une dérivée des pixels moyennés, et
   - identifier (S35) le pixel correspondant au pic des dérivées ainsi calculées.

**5.** Procédé selon la revendication 4, dans lequel l'étape (S4) de déduction de la distance (6) comprend une sous-étape (S34) au cours de laquelle on identifie le pixel moyenné dont la valeur est la plus faible.

**6.** Procédé selon la revendication 5, dans lequel l'étape (S4) de déduction de la distance (6) comprend en outre les sous-étapes suivantes :

- calculer (S41) une différence en multiples de pixel entre le pixel correspondant au pic des dérivées et le pixel moyenné dont la valeur est la plus faible,
- déterminer (S42) un facteur linéaire, en fonction de la position de la chaussure (2) par rapport à la caméra thermique (7), et
- multiplier (S43) la différence ainsi obtenue par le facteur linéaire

**7.** Procédé selon l'une des revendications 5 ou 6, dans lequel le pic des dérivées est déterminé (S35) parmi les dérivées correspondant aux pixels s'étendant entre le pixel moyenné dont la valeur est la plus faible et les pixels moyennés s'étendant au-dessus dudit pixel moyenné dont la valeur est la plus faible.

**8.** Procédé selon l'une des revendications 4 à 7, comprenant en outre une sous-étape (S32) au cours de laquelle on applique un filtre passe-bas aux pixels moyennés avant de calculer leur dérivée (S33).

**9.** Procédé selon l'une des revendications 1 à 8, comprenant en outre les étapes suivantes :

- déceler (S5) une stratification par empilement vertical, dans la semelle (3), par détection d'échos successifs suite à une émission d'ondes vers la semelle (3),
- normaliser (S6) la stratification ainsi décelée à partir de la distance (6) entre la face inférieure (5) du pied et la face inférieure (4) de la semelle (3) obtenue au cours de l'étape (S4) de déduction et
- comparer la valeur de la stratification ainsi normalisée avec un seuil d'alarme et déclencher une alarme (S8) en cas de dépassement.

**10.** Procédé selon l'une des revendications 1 à 9, comprenant en outre les étapes suivantes :

- déceler (S5) une stratification par empilement vertical, dans la semelle (3), par détection d'échos successifs suite à une émission d'ondes vers la semelle (3),
- identifier parmi les échos successifs l'écho de plus forte amplitude,
- déterminer un temps de transmission et de réflexion de l'écho de plus forte amplitude,

- en déduire une hauteur entre la stratification correspondant à l'écho de plus forte amplitude et la face inférieure (4) de la semelle (3), et
- comparer (S7) la hauteur ainsi déduite avec la distance (6) entre la face inférieure (5) du pied et la face inférieure (4) de la semelle (3) obtenue au cours de l'étape (S4) de déduction et, le cas échéant, déclencher une alarme (S8).

**11.** Procédé selon l'une des revendications 1 à 10, comprenant en outre les étapes suivantes :

- mesurer (S5) une capacité électrique formée par la semelle (3) de la chaussure (2) placée sur l'embase (10),
- normaliser (S6) la capacité électrique ainsi mesurée à partir de la distance (6) entre la face inférieure (5) du pied et la face inférieure (4) de la semelle (3) obtenue au cours de l'étape (S4) de déduction, et
- comparer la valeur de la capacité électrique ainsi normalisée à un seuil d'alarme et déclencher une alarme (S8) en cas de dépassement.

**12.** Procédé selon l'une des revendications 1 à 11, comprenant en outre les étapes suivantes :

- mesurer (S5) une capacité électrique formée par la semelle (3) de la chaussure (2) placée sur l'embase (10),
- en déduire une hauteur entre la face inférieure (5) du pied et la face inférieure (4) de la semelle (3), et
- comparer la hauteur ainsi déduite avec la distance (6) entre la face inférieure (5) du pied et la face inférieure (4) de la semelle (3) obtenue au cours de l'étape (S4) de déduction et, le cas échéant, déclencher une alarme (S8).

**13.** Système pour l'inspection d'une chaussure (2) comprenant une semelle (3), lorsque la chaussure (2) est portée par un individu, le système comprenant :

- une embase (10) configurée pour recevoir au moins un pied d'un individu revêtu de la chaussure (2),
- une caméra thermique (7) configurée pour acquérir une image thermique de la chaussure (2) portée par l'individu,
- des moyens (15) configurés pour déterminer une position de la chaussure (2) par rapport à la caméra thermique (7) et
- un processeur (16) configuré pour déterminer, à partir de l'image thermique de la chaussure (2), une limite (9) inférieure du pied de l'individu, ladite limite (9) inférieure correspondant à une face inférieure (5) du pied, et déduire de la position de la chaussure (2) par rapport à la caméra thermique (7) et de la limite (9) inférieure du pied une distance (6) entre la face inférieure (4) de la semelle (3) et la face inférieure (5) du pied de l'individu.

14. Système selon la revendication 13, dans lequel la caméra thermique (7) est fixée sur l'embase (10) de sorte à acquérir une image d'un talon de la chaussure (2).

15. Système selon l'une des revendications 13 ou 14, ledit système étant configuré pour inspecter deux chaussures portées par un individu et comprenant deux caméras thermiques (7), chaque caméra étant configurée pour acquérir une image de l'une des chaussures (2).

16. Système selon l'une des revendications 13 à 15, dans lequel la caméra thermique (7) est sensible aux ondes ayant des longueurs d'onde de l'ordre de la dizaine de micromètres, de préférence entre huit micromètres et quatorze micromètres.

17. Système selon l'une des revendications 13 à 16, dans lequel, lorsque l'embase (10) est posée sur un sol, un champ angulaire (8) de la caméra thermique (7) dans un plan perpendiculaire au sol est plus grand qu'un champ angulaire (8) de la caméra thermique (7) suivant un plan horizontal parallèle au sol.

18. Système selon l'une des revendications 13 à 17, dans lequel l'image thermique est une matrice bidimensionnelle comprenant N lignes de pixels et M colonnes de pixels, où N est supérieur à M.

19. Système selon l'une des revendications 13 à 18, dans lequel les moyens (15) configurés pour déterminer la position de la chaussure (2) par rapport à la caméra infrarouge comprennent l'un au moins des éléments suivants :

- une butée mécanique fixe par rapport à la caméra thermique (7) et configurée pour venir en contact avec une partie de la chaussure (2) pendant l'inspection
- un marquage visuel
- un ensemble de cellules photoélectriques configurées pour émettre et/ou recevoir un faisceau optique, ledit ensemble étant fixé sur deux parois en regard du système configurées pour être positionnées de part et d'autre de la chaussure (2)
- un ensemble d'antennes configurées pour émettre et/ou recevoir un champ magnétique, ledit ensemble étant fixé dans un socle du système
- au moins un émetteur infrarouge et un récepteur infrarouge et un dispositif d'analyse du temps aller-retour des ondes infrarouges entre l'émetteur et le récepteur.

20. Ensemble de détection comprenant un système selon l'une des revendications 13 à 19 et l'un au moins parmi les détecteurs suivants :

- un scanner corporel comprenant des moyens de détection (26) d'un objet cible à l'aide d'une ou plusieurs énergie de rayonnement modulées ou émises par le corps des individus inspectés,
- un dispositif détecteur comprenant des moyens (24) adaptés pour déceler une stratification par empilement vertical, dans la semelle (3), par détection d'échos successifs suite à une émission d'ondes vers la semelle (3),
- des moyens (22) de mesure d'une capacité électrique formée par la semelle (3) de la chaussure (2).

**Patentansprüche**

1. Verfahren zur Inspektion eines Schuhs (2), der von einem Fuß einer Person getragen wird, wobei der Schuh (2) eine Sohle (3) mit einer Unterseite umfasst, die dazu bestimmt ist, mit einem Boden in Kontakt zu kommen, und wobei das Verfahren die folgenden Schritte umfasst:

- erwerben (S1) ein Wärmebild des Schuhs (2), wenn er von einem Fuß der Person getragen wird, mithilfe einer Wärmebildkamera (7),
- Bestimmen (S2), aus dem Wärmebild des Schuhs (2), einer unteren Grenze (9) des Fußes der Person, wobei die untere Grenze (9) einer Unterseite (5) des Fußes entspricht,

**dadurch gekennzeichnet, dass** das Verfahren umfasst:

- Bestimmen (S3) einer Position des Schuhs (2) in Bezug auf die Wärmebildkamera (7) zum Zeitpunkt der Erfassung des Wärmebildes, und
- aus der Position des Schuhs (2) in Bezug auf die Kamera und der unteren Grenze (9) des Fußes einen Abstand (6) zwischen der Unterseite (4) der Sohle (3) und der Unterseite (5) des Fußes der Person ableiten (S4).

2. Verfahren nach Anspruch 1, bei dem während des Schritts (S1) zum Erfassen des Wärmebilds die Wärmebildkamera (7) in Richtung der Ferse des Fußes der Person ausgerichtet wird, so dass das erhaltene Wärmebild die Ferse umfasst.

3. Verfahren nach einem der Ansprüche 1 oder 2, wobei das Wärmebild eine zweidimensionale Matrix mit N Pixelzeilen und M Pixelspalten ist, in der jedem Pixel ein Wert einer Strahlungsintensität entspricht.

4. Verfahren nach Anspruch 3, wobei der Schritt (S3) des Bestimmens der Grenze (9) die folgenden Teilschritte umfasst:

- für die N Zeilen von Pixeln, Berechnen (S31) eines Durchschnitts der Werte von Pixeln, die zu derselben Zeile gehören, um eine Spalte von N gemittelten Pixeln zu erhalten, und
- Berechnen (S34) einer Ableitung der gemittelten Pixel, und
- das Pixel identifizieren (S35), das dem Peak der so berechneten Ableitungen entspricht.

5. Verfahren nach Anspruch 4, wobei der Schritt (S4) des Ableitens der Abstand (6) einen Unterschritt (S34) umfasst, in dem das gemittelte Pixel identifiziert wird, dessen Wert am niedrigsten ist.

6. Verfahren nach Anspruch 5, wobei der Schritt (S4) des Ableitens der Abstand (6) außerdem die folgenden Unterschritte umfasst:

- Berechnen (S41) einer Differenz in Pixelvielfachen zwischen dem Pixel, das dem Spitzenwert der Ableitungen entspricht, und dem gemittelten Pixel, dessen Wert am niedrigsten ist,
- Bestimmen (S42) eines linearen Faktors, abhängig von der Position des Schuhs (2) in Bezug auf die Wärmebildkamera (7), und
- Multiplizieren (S43) der so erhaltenen Differenz mit dem linearen Faktor

7. Verfahren nach einem der Ansprüche 5 oder 6, wobei die Spitze der Ableitungen unter den Ableitungen bestimmt wird (S35), die den Pixeln entsprechen, die sich zwischen dem gemittelten Pixel mit dem niedrigsten Wert und den gemittelten Pixeln, die sich über dem gemittelten Pixel mit dem niedrigsten Wert erstrecken, erstrecken.

8. Verfahren nach einem der Ansprüche 4 bis 7, das außerdem einen Unterschritt (S32) umfasst, bei dem ein Tiefpassfilter auf die gemittelten Pixel angewendet wird, bevor ihre Ableitung (S33) berechnet wird.

9. Verfahren nach einem der Ansprüche 1 bis 8, das außerdem die folgenden Schritte umfasst:

- Erkennen (S5) einer vertikalen Stapelschichtung in der Sohle (3) durch Erfassen aufeinanderfolgender Echos infolge einer Wellenemission in Richtung der Sohle (3),
- Normalisieren (S6) der so festgestellten Schichtung anhand des Abstands (6) zwischen der Unterseite (5) des Fußes und der Unterseite (4) der Sohle (3), der im Schritt (S4) des Abziehens erhalten wurde, und
- den Wert der so normalisierten Schichtung mit einer Alarmschwelle vergleichen und bei Überschreitung einen Alarm (S8) auslösen.

10. Verfahren nach einem der Ansprüche 1 bis 9, das außerdem die folgenden Schritte umfasst:

- Erkennen (S5) einer vertikalen Stapelschichtung in der Sohle (3) durch Erfassen aufeinanderfolgender Echos infolge einer Wellenemission in Richtung der Sohle (3),
- unter den aufeinanderfolgenden Echos das Echo mit der größten Amplitude identifizieren,
- eine Transmissions- und Reflexionszeit für das Echo mit der größten Amplitude bestimmen,
- daraus eine Höhe zwischen der Schichtung, die dem Echo mit der größten Amplitude entspricht, und der Unterseite (4) der Sohle (3) ableiten und
- Vergleichen (S7) der so abgeleiteten Höhe mit dem Abstand (6) zwischen der Unterseite (5) des Fußes und der Unterseite (4) der Sohle (3), der in dem Schritt (S4) des Abziehens erhalten wurde, und gegebenenfalls Auslösen eines Alarms (S8).

11. Verfahren nach einem der Ansprüche 1 bis 10, das außerdem die folgenden Schritte umfasst:

- Messen (S5) einer elektrischen Kapazität, die von der Sohle (3) des auf die Grundplatte (10) gestellten Schuhs (2) gebildet wird,
- Normalisieren (S6) der so gemessenen elektrischen Kapazität aus dem Abstand (6) zwischen der Unterseite (5) des Fußes und der Unterseite (4) der Sohle (3), der in dem Schritt (S4) des Abziehens erhalten wurde, und
- den Wert der so normalisierten elektrischen Kapazität mit einer Alarmschwelle vergleichen und bei Überschreitung einen Alarm (S8) auslösen.

12. Verfahren nach einem der Ansprüche 1 bis 11, das außerdem die folgenden Schritte umfasst:

- Messen (S5) einer elektrischen Kapazität, die von der Sohle (3) des auf die Grundplatte (10) gestellten Schuhs (2) gebildet wird,
- daraus eine Höhe zwischen der Unterseite (5) des Fußes und der Unterseite (4) der Sohle (3) ableiten, und
- Vergleichen der so abgeleiteten Höhe mit dem Abstand (6) zwischen der Unterseite (5) des Fußes und der Unterseite (4) der Sohle (3), der in dem Schritt (S4) des Abziehens erhalten wurde, und gegebenenfalls Auslösen eines Alarms (S8).

13. System zur Inspektion eines Schuhs (2) mit einer Sohle (3), wenn der Schuh (2) von einer Person getragen wird, wobei das System umfasst:

- eine Grundplatte (10), die so gestaltet ist, dass sie mindestens einen Fuß einer mit dem Schuh (2) bekleideten Person aufnimmt,
- eine Wärmebildkamera (7), die so konfiguriert ist, dass sie ein Wärmebild des von der Person getragenen Schuhs (2) erfasst,
- Mittel (15), die so konfiguriert sind, dass sie eine Position des Schuhs (2) in Bezug auf die Wärmebildkamera (7) bestimmen, und
- einen Prozessor (16), der so konfiguriert ist, dass er aus dem Wärmebild des Schuhs (2) eine Grenze (9) eine untere Grenze (9) des Fußes der Person bestimmt, wobei die untere Grenze (9) einer Unterseite (5) des Fußes entspricht, und aus der Position des Schuhs (2) in Bezug auf die Wärmebildkamera (7) und der unteren Grenze (9) des Fußes einen Abstand (6) zwischen der Unterseite (4) der Sohle (3) und der Unterseite (5) des Fußes der Person ableitet.

14. System nach Anspruch 13, bei dem die Wärmebildkamera (7) so an der Grundplatte (10) befestigt ist, dass sie ein Bild von einem Absatz des Schuhs (2) erfasst.

15. System nach einem der Ansprüche 13 oder 14, wobei das System so konfiguriert ist, dass es zwei von einer Person getragene Schuhe (2) inspiziert, und zwei Wärmebildkameras (7) umfasst, wobei jede Kamera so konfiguriert ist, dass sie ein Bild von einem der Schuhe (2) erfasst.

16. System nach einem der Ansprüche 13 bis 15, wobei die Wärmebildkamera (7) für Wellen mit Wellenlängen im Bereich von zehn Mikrometern, vorzugsweise zwischen acht Mikrometern und vierzehn Mikrometern, empfindlich ist.

17. System nach einem der Ansprüche 13 bis 16, wobei, wenn die Grundplatte (10) auf einem Boden steht, ein Winkelfeld (8) der Wärmebildkamera (7) in einer Ebene senkrecht zum Boden größer ist als ein Winkelfeld (8) der Wärmebildkamera (7) entlang einer horizontalen Ebene parallel zum Boden.

18. System nach einem der Ansprüche 13 bis 17, wobei das Wärmebild eine zweidimensionale Matrix mit N Zeilen aus Pixeln und M Spalten aus Pixeln ist, wobei N größer als M ist.

19. System nach einem der Ansprüche 13 bis 18, wobei die Mittel (15), die so konfiguriert sind, dass sie die Position des Schuh (2) in Bezug auf die Infrarotkamera bestimmen, mindestens eines der folgenden Elemente umfassen:

- einen mechanischen Anschlag, der in Bezug auf die Wärmebildkamera (7) fixiert und so konfiguriert ist, dass er während der Inspektion mit einem Teil des Schuhs (2) in Kontakt kommt
- eine visuelle Markierung
- eine Anordnung von Fotozellen, die so konfiguriert sind, dass sie einen optischen Strahl aussenden und/oder empfangen, wobei die Anordnung an zwei gegenüberliegenden Wänden des Systems befestigt ist, die so konfiguriert sind, dass sie auf beiden Seiten des Schuhs (2) positioniert werden können
- eine Gruppe von Antennen, die so konfiguriert sind, dass sie ein Magnetfeld aussenden und/oder empfangen, wobei die Gruppe in einem Sockel des Systems befestigt ist
- mindestens einen Infrarotsender und einen Infrarotempfänger sowie eine Vorrichtung zur Analyse der Zeit für den Hin- und Rückweg der Infrarotwellen zwischen Sender und Empfänger.

20. Detektoranordnung mit einem System nach einem der Ansprüche 13 bis 19 und mindestens einem der folgenden Detektoren :

- einen Körperscanner mit Mitteln zum Erfassen (26) eines Zielobjekts mithilfe von einer oder mehreren Strahlungsenergien, die von den Körpern der inspizierten Personen moduliert oder emittiert werden,
- eine Detektorvorrichtung mit Mitteln (24), die so beschaffen sind, dass sie eine vertikale Stapelschichtung in der Sohle (3) durch Erfassen aufeinanderfolgender Echos infolge einer Wellenemission zur Sohle (3) hin erkennen,
- Mittel (22) zum Messen einer elektrischen Kapazität, die von der Sohle (3) des Schuhs (2) gebildet wird.

**Claims**

1. A method of inspection of a shoe (2) worn by an individual's foot, the shoe (2) comprising a sole (3) having a lower face intended to come into contact with a ground, and the method comprising the following steps:

- acquiring (S1) a thermal image of the shoe (2) when it is worn by a foot of the individual using a thermal imaging camera (7),
- determining (S2), from the thermal image of the shoe (2), a lower limit (9) of the individual's foot, said lower limit (9) corresponding to a lower face (5) of the foot,

**characterised in that** the method comprises:

- determining (S3) a position of the shoe (2) relative to the thermal imaging camera (7) at the time of acquisition of the thermal image, and
- deducing (S4) from the position of the shoe (2) relative to the camera and from the lower limit (9) of the foot, a distance (6) between the lower face (4) of the sole (3) and the lower face (5) of the individual's foot.

2. The method according to claim 1 wherein, during the step (S1) of acquiring the thermal image, the thermal imaging camera (7) is oriented towards the heel of the individual's foot so that the thermal image obtained includes the heel.

3. The method according to one of claims 1 or 2, wherein the thermal image is a two-dimensional matrix comprising N rows of pixels and M columns of pixels, wherein each pixel corresponds to a value of a radiation intensity.

4. The method according to claim 3, wherein the step (S3) of determining the lower limit (9) comprises the following sub-steps:

- for the N rows of pixels, calculating (S31) an average of the values of the pixels belonging to the same row in order to obtain a column of N averaged pixels, and
- calculating (S34) a derivative of the averaged pixels, and
- identifying (S35) the pixel corresponding to the peak of the derivatives thus calculated.

5. The method according to claim 4, wherein the step (S4) of deducing the distance (6) comprises a sub-step (S34) wherein the averaged pixel with the lowest value is identified.

6. The method according to claim 5, wherein the step (S4) of deducing the distance (6) further comprises the following sub-steps:

- calculating (S41) a difference in pixel multiples between the pixel corresponding to the peak of the derivatives and the averaged pixel with the lowest value,
- determining (S42) a linear factor as a function of the position of the shoe (2) relative to the thermal imaging camera (7), and
- multiplying (S43) the difference thus obtained by the linear factor.

7. The method according to one of claims 5 or 6, wherein the peak of the derivatives is determined (S35) from among the derivatives corresponding to the pixels extending between the averaged pixel with the lowest value and the averaged pixels extending above said averaged pixel with the lowest value.

8. The method according to one of claims 4 to 7, further comprising a sub-step (S32) wherein a low-pass filter is applied to the averaged pixels before calculating their derivative (S33).

9. The method according to any of claims 1 to 8, further comprising the following steps:

- detecting (S5) stratification by vertical stacking, in the base plate (3), by detecting successive echoes following a wave emission towards the sole (3),
- standardising (S6) the stratification thus detected based on the distance (6) between the lower face (5) of the foot and the lower face (4) of the sole (3) obtained during the deducing step (S4), and
- comparing the standardised stratification value with an alarm threshold and triggering an alarm (S8) if the value is exceeded.

10. The method according to any of claims 1 to 9, further comprising the following steps:

- detecting (S5) stratification by vertical stacking, in the sole (3), by detecting successive echoes following a wave emission towards the sole (3),
- identifying the greatest amplitude echo among successive echoes,
- determining a transmission and reflection time of the highest amplitude echo,
- deducing therefrom a height between the stratification corresponding to the echo of greatest amplitude and the lower face (4) of the sole (3), and
- comparing (S7) the height thus deduced with the distance (6) between the lower face (5) of the foot and the lower face (4) of the sole (3) obtained during the deducing step (S4) and, if necessary, triggering an alarm (S8).

11. The method according to any of claims 1 to 10, further comprising the following steps:

- measure (S5) an electrical capacitance formed by the sole (3) of the shoe (2) placed on the base (10),
- standardising (S6) the electrical capacitance thus measured based on the distance (6) between the lower face (5) of the foot and the lower face (4) of the sole (3) obtained during the deducing step (S4), and
- comparing the value of the electrical capacity normalised in this way with an alarm threshold and trigger an alarm (S8) if it is exceeded.

12. The method according to any of claims 1 to 11, further comprising the following steps:

    - measuring (S5) an electrical capacitance formed by the sole (3) of the shoe (2) placed on the base (10),
    - deducing a height between the lower face (5) of the foot and the lower face (4) of the sole (3), and
    - comparing the height thus deduced with the distance (6) between the lower face (5) of the foot and the lower face (4) of the sole (3) obtained during the deducing step (S4) and, if necessary, triggering an alarm (S8).

13. A system for inspecting a shoe (2) comprising a sole (3), when the shoe (2) is worn by an individual, the system comprising:

    - a base (10) configured to receive at least one foot of an individual wearing the shoe (2),
    - a thermal imaging camera (7) configured to acquire a thermal image of the shoe (2) worn by the wearer,
    - means (15) configured to determine a position of the shoe (2) relative to the thermal imaging camera (7) and
    - a processor (16) configured to determine, from the thermal image of the shoe (2), a lower limit (9) of the individual's foot, said lower limit (9) corresponding to a lower face (5) of the foot, and to deduce from the position of the shoe (2) with respect to the thermal imaging camera (7) and from the lower limit (9) of the foot a distance (6) between the lower face (4) of the sole (3) and the lower face (5) of the individual's foot.

14. System according to claim 13, wherein the thermal imaging camera (7) is fixed to the base (10) so as to acquire an image of a heel of the shoe (2).

15. A system according to one of claims 13 or 14, said system being configured to inspect two shoes (2) worn by an individual and comprising two thermal imaging cameras (7), each camera being configured to acquire an image of one of the shoes (2).

16. System according to one of claims 13 to 15, wherein the thermal imaging camera (7) is sensitive to waves having wavelengths of the order of ten micrometres, preferably between eight micrometres and fourteen micrometres.

17. System according to one of claims 13 to 16, wherein, when the base (10) is placed on a floor, an angular field (8) of the thermal imaging camera (7) in a plane perpendicular to the floor is greater than an angular field (8) of the thermal imaging camera (7) in a horizontal plane parallel to the floor.

18. The system of any of claims 13 to 17, wherein the thermal image is a two-dimensional matrix comprising N rows of pixels and M columns of pixels, where N is greater than M.

19. A system according to any one of claims 13 to 18, wherein the means (15) configured to determine the position of the shoe (2) relative to the infrared camera comprise at least one of the following elements:

    - a mechanical stop fixed relative to the thermal imaging camera (7) and configured to come into contact with part of the shoe (2) during inspection
    - a visual marking
    - a set of photoelectric cells configured to emit and/or receive an optical beam, said set being fixed to two facing walls of the system configured to be positioned on either side of the shoe (2)
    - a set of antennae configured to emit and/or receive a magnetic field, said set being fixed in a pedestal of the system
    - at least one infrared transmitter and one infrared receiver and a device for analysing the round-trip time of the infrared waves between the transmitter and the receiver.

20. Detection assembly comprising a system according to one of claims 13 to 19 and at least one of the following detectors :

    - a body scanner comprising means (26) for detecting a target object using one or more radiation energies modulated or emitted by the body of the individuals inspected,
    - a detecting device comprising means (24) adapted to detect stratification by vertical stacking, in the base (3), by detecting successive echoes following emission of waves towards the base (3),
    - means (22) for measuring an electrical capacitance formed by the sole (3) of the shoe (2).

# FIG. 1
# Etat de la technique

# FIG. 2

# FIG. 3a

# FIG. 3b

FIG. 3c

FIG. 3d

## FIG. 3e

## FIG. 3f

FIG. 3g

FIG. 3h

**FIG. 4a**

**FIG. 4b**

°C

28.3

28

27

26

25.1

## FIG. 4c

## FIG. 4d

## FIG. 5a

## FIG. 5b

## FIG. 6

# FIG. 7

# FIG. 8

## FIG. 9

S

| Acquérir une image thermique de la chaussure portée | S1 |

| Déterminer à partir de l'image thermique une limite inférieure du pied | S2 |

| Déterminer une position de la chaussure par rapport à la caméra | S3 |

| En déduire une distance entre la face inférieure du pied et le sol la face inférieure de la semelle | S4 |

| Déceler une valeur de stratification par empilement vertical et/ou de capacité électrique formée par la semelle | S5 |

S7
| Comparer la valeur décelée à la distance entre les faces inférieures du pied et de la semelle ainsi déduite |

| Normaliser la valeur décelée à partir de la distance entre les faces inférieures du pied et de la semelle ainsi déduite | S6 |

| Le cas échéant, déclencher une alarme | S8 |

## FIG. 10

S3

| | |
|---|---|
| Calculer une moyenne des valeurs des pixels appartement à une même ligne | S31 |
| Appliquer un filtre passe-bas aux valeurs des pixels moyennés | S32 |
| Identifier le pixel dont la valeur moyennée est la plus faible | S33 |
| Calculer une dérivée des valeurs des pixels moyennés situés au-dessus du pixel dont la valeur est la plus faible | S34 |
| Identifier le pixel correspondant au pic des dérivées | S35 |

## FIG. 11

S4

| | |
|---|---|
| Calculer une différence entre le pixel correspondant au pic des dérivées et le pixel dont la valeur est la plus faible | S41 |
| Déterminer un facteur linéaire fonction de la position de la chaussure | S42 |
| Multiplier la différence par le facteur linéaire | S43 |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2860631
- EP 1574879 A
- FR 2889338
- FR 2911212
- US 20140320331 A
- US 69752332 B
- US 2005116825 A
- FR 2950976
- US 2007235652 A
- EP 2202700 A
- US 20070235652 A
- FR 1655726